# EUROPEAN PATENT APPLICATION

(11) **EP 4 072 027 A1**
(43) Date of publication of application: **12.10.2022**
(21) Application number: 21167696.0
(22) Date of filing: 09.04.2021
(51) Int. Cl.: H04B 1/00, H04L 27/04, H04W 52/22, H04W 52/30

(54) **WIRELESS TRANSCEIVER AND METHOD OF CONTROLLING A WIRELESS TRANSMISSION**

(71) Applicant: Siemens Aktiengesellschaft, 80333 München (DE)
(72) Inventor: Ramirez, Alejandro, 80797 München (DE)

(57) **Abstract**

Embodiments disclosed herein may maximize a transmit power of a wireless transceiver without exceeding limits mandated by a regulatory office. While current practices merely set a transmit gain which is applied for all kinds of possible signal patterns, the embodiments propose to determine the transmit power instead of limiting the transmission to a worst-case scenario. The transmit power may be determined by emulating, simulating, or measuring one or more values by which the transmit power can be derived, whereby further parameters may be taken into account.

By raising the average transmit power, the communication signal may be transmitted farther, the obtained data rate may be higher and less packet losses may occur. In general, this may lead to a better usage of a wireless channel.

## Description

### TECHNICAL FIELD

The present embodiments relate to wireless transceivers and, more particularly, to techniques for controlling a transmit power level for use therein.

National regulatory offices such as the German Bundesnetzagentur fur Elektrizitat, Gas, Telekommunikation, Post und Eisenbahnen (BNetzA) or the U.S.-American Federal Communications Commission (FCC) mandate upper limits of a transmit power in which wireless transmission is allowed to legally operate.

Within a specific frequency band, the maximum transmitted power radiated by an isotropic antenna is limited. Another typical limit is the amount of instantaneous power and/or the energy radiated within a specific period of time, e.g. within a minute or a second.

It is desirable to maximize the transmit power of a wireless transceiver without exceeding the mandated rules as to achieve a maximum range and coverage with the least number of devices possible, as to save costs of infrastructure. Generally, signal-to noise ratio (SNR) and associated communication transmission signal quality parameters improve with increased transmission signal power, as the noise is kept constant. It is desirable to have a method and a wireless transceiver for providing high-power transmission signals within a wireless networking environment without exceeding radiated power requirements.

### SUMMARY

Embodiments herein generally involve a method for controlling a wireless transmission of modulated communication signals by a wireless transceiver. In one embodiment, the wireless transceiver is configured to generate a carrier signal and to modulate communication data onto said carrier signal, the modulated communication signal being said carrier signal modulated with said communication data.

In one embodiment, an average transmit power associated with an adjustable time interval is determined and a transmit power level in response to the determined average transmit power is controlled so that the average transmit power does not substantially exceed a predetermined threshold.

In one embodiment, determining an average transmit power comprises feeding the communication data to a software-defined radio (SDR) processor prior to being fed to the wireless transceiver, analyzing the communication data by the SDR processor by including transmission parameters of the wireless transceiver, and calculating the average transmit power by the SDR processor.

In one embodiment, determining an average transmit power comprises continuously measuring instantaneous values of the transmit power of the wireless transmission, integrating and averaging the measured values over the adjustable time interval to receive the average transmit power.

In one embodiment, controlling the transmit power level comprises controlling an amplitude of the communication signals determined for the wireless transmission.

In one embodiment, controlling the transmit power level comprises controlling an amplitude ratio - including a ratio between a maximum amplitude and an average amplitude, a ratio between a maximum amplitude and a minimum amplitude, and a ratio between a minimum amplitude and an average amplitude - of the communication signals.

In one embodiment, controlling the transmit power level comprises controlling a transmit power level of the wireless transceiver.

In one embodiment, controlling the transmit power level comprises controlling a duty cycle or transmission activity ratio of the communication signals determined for the wireless transmission.

In another embodiment, a wireless transceiver enabling a wireless transmission of modulated communication signals is disclosed, the wireless transceiver including a modulator for generating a carrier signal and for modulating communication data onto said carrier signal to produce the communication signal, a determination module for determining an average transmit power associated with an adjustable time interval, and a control module for controlling a transmit power level in response to the determined average transmit power so that the average transmit power does not substantially exceed a predetermined threshold. The wireless transceiver may be a base station or a terminal device.

### DESCRIPTION OF THE DRAWING

The objects as well as further advantages of the present embodiments will become more apparent and readily appreciated from the following description of the preferred embodiments, taken in conjunction with the accompanying drawing in which:
- FIG. 1: is an illustration of a transceiver operating in a communication system in accordance with some embodiments;
- FIG. 2: is an illustration of a transceiver-external determination module exchanging data with the transceiver;
- FIG. 3: illustrates two signal patterns of amplitude modulated carrier signals wherein the respective modulating communication data is a sequence of identical data values;
- FIG. 4: illustrates a signal pattern of an amplitude modulated carrier signal wherein the modulating communication data is a sequence of alternating data values;
- FIG. 5: illustrates a first signal pattern of an amplitude modulated carrier characterized by specific maximum, minimum and mean values of transmit power;
- FIG. 6: illustrates a second signal pattern of an amplitude modulated carrier characterized by specific maximum, minimum and mean values of transmit power;
- FIG. 7: illustrates a third signal pattern of an amplitude modulated carrier characterized by specific maximum, minimum and mean values of transmit power.

### DETAILED DESCRIPTION

National regulatory offices limit a maximum transmitted power radiated by transceivers. As a specific example, a document entitled Frequenznutzungsplan or Frequency usage plan, which is issued by the German national regulatory office Bundesnetzagentur, mandates a limit for an EIRP (equivalent isotropically radiated power) in a frequency range between 2400 MHz and 2450 MHz. This limit is set to 100 mW (milli Watts) irrespective of a modulation of the carrier signal. Every wireless transceiver operated in the jurisdiction of this national regulatory office has to comply with these regulations, and thus a transmission in operation has to be permanently limited.

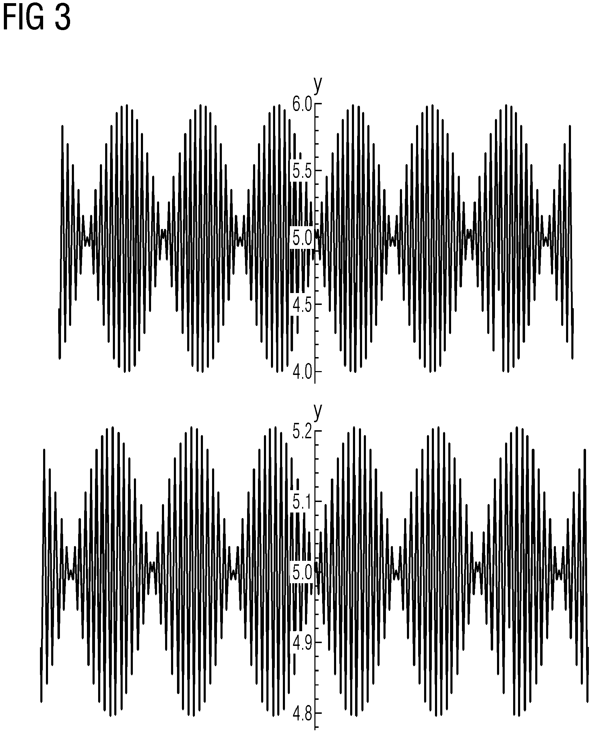

Modulation of communication data on a carrier signal or a carrier wave changes an amplitude and/or a frequency of the signal to form signal patterns transporting the communication data. FIG. 3 depicts two signal patterns of an amplitude modulation (AM) applied to identic carrier signals, wherein an upper and a lower signals pattern of FIG. 3 are both a result of an amplitude modulation with a respective sequence of uniform communication data. The communication data is a sequence of binary one values for the upper signal pattern and a sequence of binary zero values for the lower signal pattern. Observe that maximum amplitude and scale of the upper signal pattern is not equal to maximum amplitude and scale of the lower signal pattern.

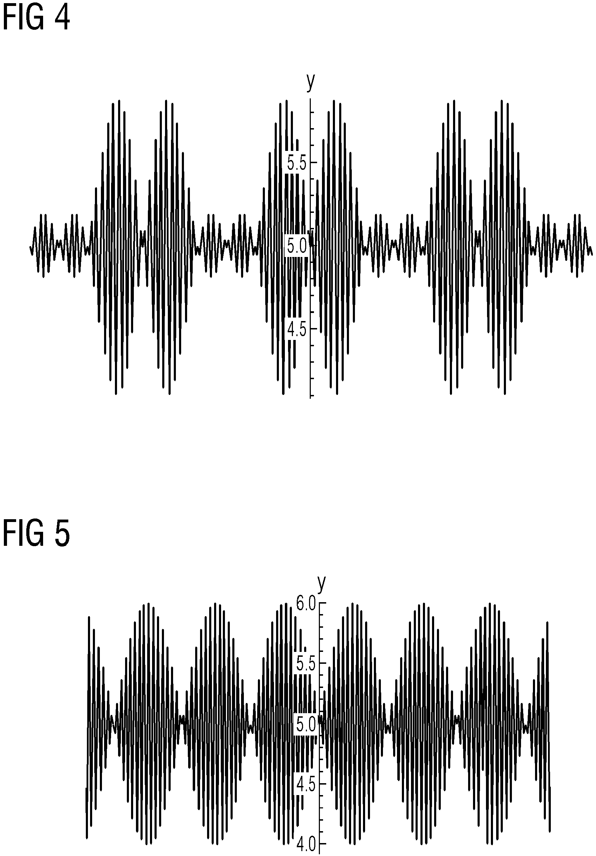

FIG. 4 depicts a signal pattern of an amplitude modulation applied to a carrier signal, wherein the signal pattern of FIG. 4 is a result of a modulation by a sequence of two binary ones alternating with two binary zeros.

Amplitude modulation is at least part of nearly all currently existing high-rate modulation schemes notwithstanding the fact that these high-rate modulation schemes may additionally include further modulation scheme components such as frequency modulation, phase modulation etc.

As range, signal-to noise ratio (SNR) and associated communication transmission signal quality parameters improve with increased transmission signal power, it is desirable to maximize the transmit power of a wireless transceiver within the legal limits mandating the transmit power.

Current transceivers unnecessarily limit their transmit power in order to comply with a worst-case scenario. To this end, an amplitude of the transmit power is set as if the carrier signal always had the maximum amplitude, and an average is then calculated. The average may be calculated as an arithmetic mean of the squares of a set of values or Root mean square (RMS) value. In FIG. 5 the maximum transmit power is assigned to a value of 6, the minimum transmit power is assigned to a value of 4, resulting in an arithmetic mean of 5 and an RMS of 5.7. This is the signal that a current transceiver would deliver when the regulation limits the signal to a RMS value of 5.7.

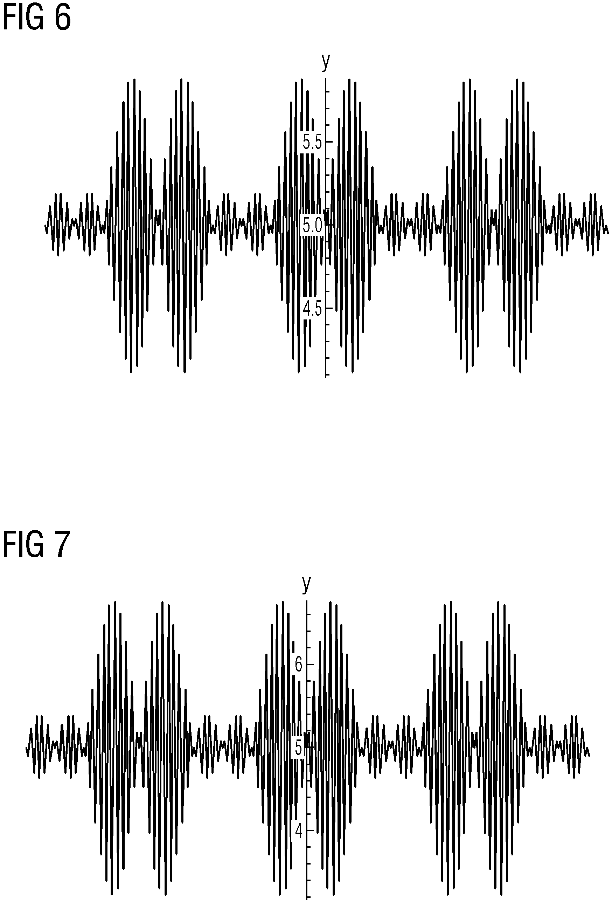

FIG. 6 illustrates a signal pattern deviating of the »worst case« shown in FIG. 5. While the maximum and the minimum transmit power of the amplitude modulated carrier signal in FIG. 6 are identical to the amplitude modulated carrier signal shown in FIG. 5, the RMS value of the amplitude modulated carrier signal shown in FIG. 6 is smaller with respect to the carrier signal shown in FIG. 5.

Although the worst-case scenario shown in FIG. 3 is still technically possible (if a specific row of bits needs to be sent), the maximum power will not be kept constant so that government regulations are not violated under any case.

Although the worst-case scenario shown in FIG. 5 is at least temporarily possible - namely when the communication data to be modulated to the carrier signal consist of a longer bit series of 1 - merely adjusting the transmit power to the mandated limit cannot provide a basis for, as the worst-case scenario, although temporarily, would exceed the mandated limit.

The embodiments strive to maximize the transmit power of a wireless transceiver without exceeding limits mandated by a respective national regulatory office. While current practices merely set a transmit gain which is applied for all kinds of possible signal patterns, the embodiments propose to determine - e.g. to emulate or to measure - a transmit power instead of limiting the transmission to a worst-case scenario. Although such determining measures according to the embodiments may possibly involve additional effort or costs, the advantages to be expected outweigh the possible effort. The embodiments advantageously allow for more robust communications over higher distances.

The transmit power may be determined by emulating, simulating or measuring one or more values by which the transmit power can be derived, whereby further parameters may be taken into account. As an alternative of determining the transmit power, other values being equivalent to the transmit power may be determined such as, for example, an average transmit power, an average transmit power associated with an adjustable time interval, or an amount of energy being radiated or transmitted.

According to a possible embodiment the transmit power may be measured in vicinity to an antenna of a transceiver. In its simplest form, analogue means may be applied using a capacitor circuit connected to the antenna. A discharge circuit may be used to track an amount of energy over a specific amount of time. An analog-to-digital converter (ADC) connected to the antenna may be applied for digitally determining an energy.

According to a possible embodiment the transmit power may be determined using Software Defined Radio (SDR) methodologies. Using a software-defined radio processor, signal patterns of the carrier signal and the finally modulated communication signal may be calculated by a computer, and thus the average transmit power and/or the total amount of energy may be controlled by the software-defined radio processor in compliance with the mandated limits.

In FIG. 7 the outcome of such a control is shown. The signal pattern shown in this figure is a possible result of controlling the communication signal according to the proposed embodiments. The signal pattern according to FIG. 7 has the same RMS value of 5.7 as the signal pattern according to FIG. 6, but the maximum amplitude - which may reflect the maximum transmit power - has a value of 7 instead of 6.

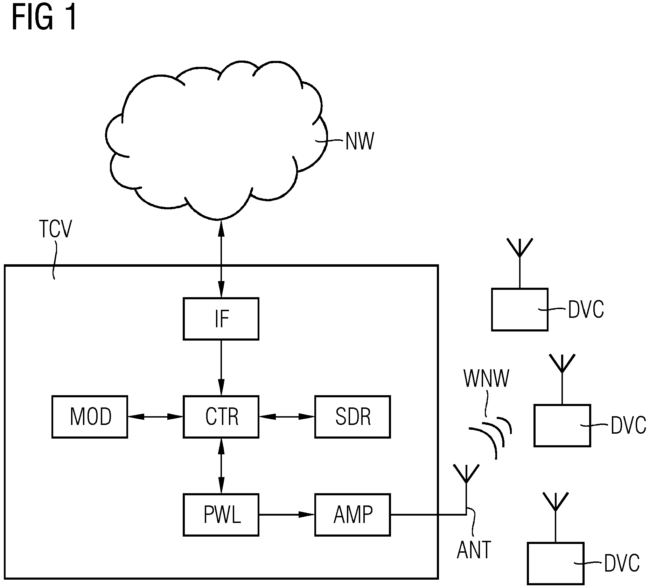

FIG. 1 illustrates a section of an exemplary communication system wherein a transceiver TCV is connected with a network NW and wherein the transceiver TCV provides an air interface or wireless network WNW operable to support wireless devices DVC over a wireless link being part of the wireless network WNW.

The network NW may comprise any architecture or type, including wired or wireless networks, cellular networks, core networks, communication networks, local area networks (LAN) or wide area networks (LAN). The network NW may be operable to route data from one part of the wireless network WNW to another, as well as interfacing with other communication systems.

The transceiver TCV may be operated as a base station or radio base station. Examples of base stations include wireless access points and all kinds of network nodes for wireless local area networks (LAN). Examples of radio base stations include radio access network nodes, base transceiver stations, Node Bs, evolved Node Bs, g Node Bs, access points, access nodes, and backhaul nodes. The transceiver may include a Radio Network Controllers (RNC) which control the Node Bs and the communication over the air interface. The transceiver TCV may be operated as transmitter (sending and/or receiving) module in a wireless network node.

The wireless network WNW may include any wireless network protocol or wireless interfaces, including Wireless Fidelity (WiFi) or Wireless Local Area Networks (WLAN), cellular networks, communication networks, radio access networks (RAN) etc. The wireless network WNW may be operable to support wireless user equipment a radio link being part of the air interface.

Wireless device DVC may include wireless user equipment (UE), mobile stations, handsets, communication terminals, wireless local loop phones, personal digital assistants, laptop or notebook computers, embedded communication processors, wireless or network equipped sensors, network equipped vehicles, and so-called Internet of Things (IoT) devices or any communication element communicating over the air interface.

The transceiver TCV comprises an interface IF which is operable to bidirectionally exchange digital communication data with one or more network nodes - not shown - of the network NW. The interface IF is coupled to a controller CTR which is operable to control the operation of the transceiver TCV.

The controller CTR is coupled to modulator MOD which is arranged for generating a carrier signal and for modulating said communication data onto the carrier signal to produce the communication signal, which may be returned to the controller CTR.

The controller CTR is furthermore coupled to a software-defined radio processor SDR which - acting as a determination module - is arranged for analyzing communication signals egressed by the modulator MOD or, alternatively, for analyzing communication data from the controller CTR directly.

Considering additional transmission parameters associated with the characteristics of the transceiver TCV (e.g. antenna gain, geometry, transmission direction characteristics etc.) the determination module - or the radio processor SDR in this case - is capable of analyzing the communication signals and/or the communication data and calculating an expected average transmit power. The SDR processor calculates the expected average transmit power prior to an actual transmittal of the communication signals and without the need of actually transmitting the communication signals.

The controller CTR is furthermore coupled to a transmit power control module PWL which is arranged to control the transmit power level in response to the determined average transmit power so that the average transmit power does not substantially exceed a predetermined threshold. A - not shown - control loop may be arranged to enhance the control task of approaching but not exceeding the predetermined threshold.

Communication signals, having been modulated by the modulator MOD and having been control by the control module PWL are then forwarded to an amplifier module AMP and eventually feed into an antenna ANT for wirelessly exchanging communication signals with one or more terminal devices DVC. Alternatively, one or more - not shown - wireless transceivers are communication partners of the wireless communication exchange.

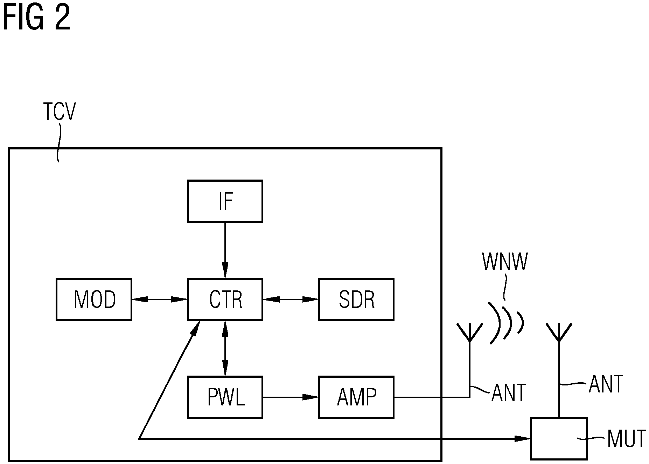

FIG. 2 shows an alternative determination module for determining the average transmit power. In contrast to the exemplary embodiment explained above, the actual transmit power is measured rather than determining the expected transmit power prior to the actual transmittal of the communication signals.

The determination module according to this embodiment is measuring unit MUT remotely arranged in radiation are of the transceiver's antenna ANT. The measuring unit MUT itself is equipped with an antenna ANT and bidirectionally connected with the controller CTR of the transceiver TCT as shown in the drawing. Within the measuring unit MUT, the signal received by its antenna is rectified and/or averaged. A value expressing a signal strength of this signal is then measured with regard to its instantaneous and/or averaged power.

This value expressing the signal strength is then fed to the controller CTR. Considering additional transmission parameters associated with the characteristics of the transceiver TCV (e.g. antenna gain, geometry, transmission direction characteristics etc.) the controller CTR is capable of analyzing the signal strength along with the transmission parameters in order to calculate an average transmit power. Raising the average transmit power leads to lots of advantages. For example, the communication signal may be transmitted farther, the obtained data rate may be higher and less packet losses may occur. In general, this may lead to a better usage of a wireless channel.

In view of extremely high costs for obtaining a license by a provider to use of a frequency band, the embodiments may achieve a higher range of service while supplying more end users within a particular frequency band.

An implementation of the proposed methods advantageously requires only minimal amendments on the transceiver side but, further advantageously, no amendments on the end user device side. On the transceiver side, the signal received will be simply »louder« than expected for the same distance between the transceiver and the end user device. The end user device will experience this as if the transceiver was closer. Eventually, the implementation of the proposed methods advantageously allows for a lower density of transceivers in the provider's service domain.

It is to be understood that the elements and features recited in the appended claims may be combined in different ways to produce new claims that likewise fall within the scope of the present invention. Thus, whereas the dependent claims appended below depend from only a single independent or dependent claim, it is to be understood that these dependent claims can, alternatively, be made to depend in the alternative from any preceding or following claim, whether independent or dependent, and that such new combinations are to be understood as forming a part of the present specification.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description.

## Claims

1. A method of controlling a wireless transmission of modulated communication signals by a wireless transceiver, the wireless transceiver configured to generate a carrier signal and to modulate communication data onto said carrier signal, the modulated communication signal being said carrier signal modulated with said communication data, the method comprising:
- determining an average transmit power associated with an adjustable time interval;
- controlling a transmit power level in response to the determined average transmit power so that the average transmit power does not substantially exceed a predetermined threshold.

2. The method of claim 1, wherein determining an average transmit power comprises:
- feeding said communication data to a software-defined radio processor prior to being fed to the wireless transceiver;
- analyzing the communication signals by the software-defined radio processor by including transmission parameters of the wireless transceiver, and calculating the average transmit power by the software-defined radio processor.

3. The method of claim 1, wherein determining an average transmit power comprises:
- continuously measuring instantaneous values of the transmit power of the wireless transmission;
- integrating and averaging the measured values over the adjustable time interval to receive the average transmit power.

4. The method of claim 1, wherein controlling the transmit power level comprises controlling an amplitude of the communication signals determined for the wireless transmission.

5. The method of claim 1, wherein controlling the transmit power level comprises controlling an amplitude ratio of the communication signals determined for the wireless transmission.

6. The method of claim 1, wherein controlling the transmit power level comprises controlling a transmit power level of the wireless transceiver.

7. The method of claim 1, wherein controlling the transmit power level comprises controlling a duty cycle or transmission activity ratio of the communication signals determined for the wireless transmission.

8. A wireless transceiver enabling a wireless transmission of modulated communication signals, the wireless transceiver including:
- a modulator for generating a carrier signal and for modulating communication data onto said carrier signal to produce the communication signal,
- a determination module for determining an average transmit power associated with an adjustable time interval;
- a control module for controlling a transmit power level in response to the determined average transmit power so that the average transmit power does not substantially exceed a predetermined threshold.

9. The wireless transceiver of claim 8, wherein the wireless transceiver is a base station or a terminal device.
